(19) Europäisches Patentamt
European Patent Office
Office européen des brevets

(11) Veröffentlichungsnummer: **0 235 521**
**B1**

# (12) EUROPÄISCHE PATENTSCHRIFT

(45) Veröffentlichungstag der Patentschrift: 20.09.89

(51) Int. Cl.⁴: **C 09 B 62/09**, C 09 B 62/513, D 06 P 1/38

(21) Anmeldenummer: 87100564.1

(22) Anmeldetag: 17.01.87

ERRATUM

| DIE TEXTSTELLE:<br>TEXT PUBLISHED:<br>LE PASSAGE SUIVANT: | (SEITE, SPALTE, ZEILE)<br>(PAGE, COLUMN, LINE)<br>(PAGE, COLONNE, LIGNE) | | LAUTET BERICHTIGT:<br>SHOULD READ:<br>DEVRAIT ETRE LU: |
|---|---|---|---|
| —CH = CH—, —N N—, | 18 | 2 | —CH = CH—, —N=N—, |
| oder —CO—NH— ist und die R=, | 18 | 2 | oder —CO—NH— ist und die R*, |

Tag der Entscheidung über die Berichtigung / Date of decision on rectification / Date de décision portant sur modification: 01.06.11.89

Ausgabe- und Veröffentlichungstag / Issue and publication date / Date d'edition et de publication: 03.01.90

Patbl.Nr / EPB no: 90/01

(19) Europäisches Patentamt
European Patent Office
Office européen des brevets

(11) Veröffentlichungsnummer: **0 235 521 B1**

(12) **EUROPÄISCHE PATENTSCHRIFT**

(45) Veröffentlichungstag der Patentschrift: **20.09.89**

(51) Int. Cl.$^4$: **C 09 B 62/09**, C 09 B 62/513, D 06 P 1/38

(21) Anmeldenummer: **87100564.1**

(22) Anmeldetag: **17.01.87**

(54) **Wasserlösliche Azoverbindungen, Verfahren zu ihrer Herstellung und ihre Verwendung als Farbstoffe.**

(30) Priorität: **25.01.86 DE 3602181**

(43) Veröffentlichungstag der Anmeldung: **09.09.87 Patentblatt 87/37**

(45) Bekanntmachung des Hinweises auf die Patenterteilung: **20.09.89 Patentblatt 89/38**

(84) Benannte Vertragsstaaten: **BE CH DE FR GB IT LI**

(56) Entgegenhaltungen:
**GB–A– 2 008 144**
**GB–A– 2 008 145**
**D. HILDEBRAND et al, Melliand Textilberichte 4/1983, S. 290**
**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT**
**Postfach 80 03 20**
**D-6230 Frankfurt am Main 80 (DE)**

(72) Erfinder: **Schläfer, Ludwig, Dr.**
**Königsberger Strasse 40**
**D-6233 Kelkheim (Taunus) (DE)**
Erfinder: **Springer, Hartmut, Dr.**
**Am Erdbeerstein 27**
**D-6240 Königstein/Taunus (DE)**
Erfinder: **Kunze, Michael, Dr.**
**Platanenweg 1a**
**D-6238 Hofheim am Taunus (DE)**

**EP 0 235 521 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung liegt auf dem technischen Gebiet der Textilfarbstoffe.

Cellulosefasern und Polyesterfasern können derzeit gemeinsam wegen ihrer unterschiedlichen chemischen Natur nicht mit ein und demselben Farbstoff einheitlich und gleichmäßig gefärbt werden. Man ist gezwungen, gemischte Materialien aus diesen beiden Faserarten, wie beispielsweise Mischgewebe, in einer zweistufigen Verfahrensweise zu färben, nämlich zunächst die eine Faserart mit dem für diese geeigneten Farbstoff, sodann die andere Faserart mit dem für diese zweite Faserart geeigneten Farbstoff, jeweils unter Anwendung unterschiedlicher Verfahrensbedingungen. Solch eine Verfahrensweise ist notwendigerweise langwierig und ersatzbedürftig. Eine andere Verfahrensweise zur Färbung von solchen Mischfasermaterialien beruht auf der Verwendung von Farbstoffgemischen, so einem Gemisch aus einem faserreaktiven Farbstoff zur Anfärbung des Cellulosefaseranteils und einem Dispersionsfarbstoff zur Anfärbung des Polyesterfaseranteils. Da faserreaktive Farbstoffe üblicherweise im alkalischen Medium auf der Cellulosefaser fixieren und Dispersionsfarbstoffe üblicherweise, wie in gewissem Umfange auch die Polyesterfaser, gegen Alkali empfindlich sind, hat diese Verfahrensweise den Nachteil, daß bei der Fixierung der faserreaktiven Farbstoffe im alkalischen Millieu die gleichzeitig vorhandenen Dispersionsfarbstoffe und ebenso die Polyesterfaser geschädigt werden können.

Es hat nicht an Versuchen gefehlt, diese Nachteile auszuschließen, um Cellulosefaser-/Polyesterfaser-Gemische in einem Bad mit einem Reaktivfarbstoff-/Dispersionsfarbstoff-Gemisch anstandslos färben zu können. Diese Möglichkeit wird in einem Artikel auf Seiten 290 ff. in der Zeitschrift Melliand Textilberichte von 1983 beschrieben, und zwar für Farbstoffe mit speziellen Reaktivgruppen, nämlich einer Dichlorchinoxalin- oder Difluorpyrimidin-Gruppe, die Vorteile gegenüber Monochlortriazinfarbstoffe, insbesondere was die Hydrolyseempfindlichkeit im sauren Färbebad betrifft, haben sollen. Der Färbeweise bei einem pH-Wert zwischen 7 und 8 wird allerdings der Vorzug gegeben. Hohe Mengen an Elektrolytzusätzen (Natriumsulfat) sind erforderlich, um die bei hohen Färbetemperaturen absinkende Substantivität der Farbstoffe zu kompensieren. Farbstoffe mit hoher Substantivität gemäß denen, die in der britischen Patentanmeldungs-Veröffentlichung Nr. 2 008 144A beschrieben sind und die als faserreaktive Reste Halogentriazin-Gruppen und faserreaktive Gruppen der Vinylsulfon-Reihe kombiniert enthalten und eine hohe Substantivität besitzen sollen, sind dennoch für diese Verfahrensweise des Färbens bei hohen Temperaturen im schwach sauren pH-Bereich nicht geeignet, da ihr Fixierverhalten unterhalb des pH-Bereiches von 7 deutlich abnimmt.

Es bestand somit die Aufgabe, diese bisher bekannten Nachteile zu reduzieren oder gar zu beheben, zumal das Färben von Mischgeweben, wie beispielsweise solche aus Cellulose- und Polyesterfasern, zunehmend an Bedeutung gewinnt. Somit besteht auch verstärkt ein Interesse an Farbstoffen, die das Färben von solchen Mischgeweben problemloser machen.

Mit der vorliegenden Erfindung wurden nunmehr neue wasserlösliche Verbindungen gefunden, die der nachstehend genannten und definierten allgemeinen Formel (1) entsprechen, faserreaktive Eigenschaften besitzen und sich nicht nur mit Vorteil im alkalischen Bereich zum Färben von Cellulosefasern anwenden lassen, sondern die überraschenderweise auf Cellulosefasern bereits im schwach sauren und neutralen Bereich, nämlich unter den Bedingungen des sogenannten Hochtemperatur-Nentral-Färbeverfahrens (HTN-Verfahren) bei Temperaturen zwischen 100 und 150 °C und einem pH-Wert zwischen 4 und 8 in wäßrigem Medium, somit unter Bedingungen des Färbens von Polyesterfasern, zu fixieren vermögen. Durch die Auffindung der neuen Farbstoffe der allgemeinen Formel (1) eröffnet sich die Möglichkeit, die bisher üblichen und gebräuchlichen Dispersionsfarbstoffe zusammen mit diesen neuen Farbstoffen in einstufige Färbeverfahren zur Färbung von Cellulose/Polyester-Fasergemischen einzusetzen, in welchen beide Faserkomponenten gleichmäßig und echt durch die jeweilige Farbstoffart angefärbt werden und Ton-in-Ton-Färbungen erhalten werden können, wenn der angewendete Dispersionsfarbstoff die gleiche Nuance wie der faserreaktive Farbstoff besitzt.

Die neuen faserreaktiven Verbindungen besitzen die allgemeine Formel (1)

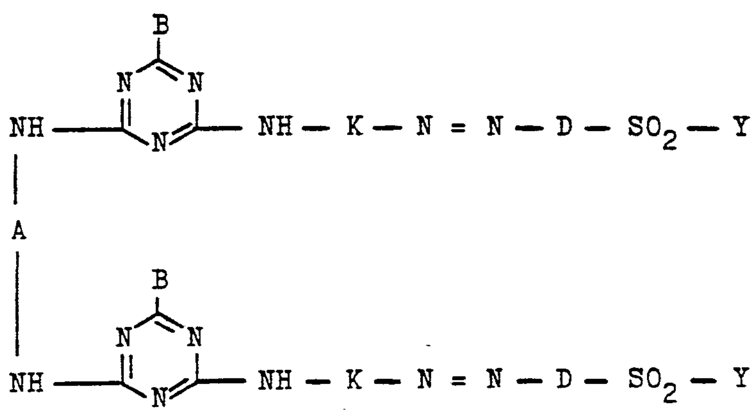

(1)

in welcher die verschiedenen Formelglieder die folgenden Bedeutungen besitzen :

A ist eine geradkettige oder verzweigte, bevorzugt geradkettige, Alkylengruppe von 2 bis 6 C-Atomen oder ein Phenylenrest, der durch 1 oder 2 Substituenten substituiert sein kann, wie beispielsweise durch 1 oder 2 Substituenten aus der Gruppe Alkoxy von 1 bis 4 C-Atomen, wie Methoxy und Ethoxy, Alkyl von 1 bis 4 C-Atomen, wie Methyl und Ethyl, Chlor, Sulfo und Carboxy, wobei insbesondere die Sulfogruppen bevorzugte Substituenten sind, oder

A ist ein Rest der allgemeinen Formel (2)

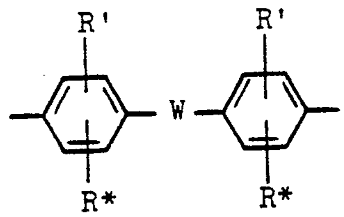

(2)

in welcher

W eine direkte Bindung oder ein Brückenglied ist, wie beispielsweise eine Gruppe der Formel $-CH_2-$, $-CH_2-CH_2-$, $-O-CH_2-CH_2-O-$, $-CH=CH-$, $-N=N-$, —NH—CO—NH— oder —CO—NH—, wobei die Gruppen $-CH=CH-$ und —NH—CO—HN— bevorzugt sind und W ebenso bevorzugt eine direkte Bindung bedeutet, und

die R′ und R*, zueinander gleich oder voneinander verschieden, die R* bevorzugt zu einander gleich, jedes ein Wasserstoffatom, ein Chloratom, eine Methyl-, Methoxy-, Ethoxy-, Carboxy- oder Sulfogruppe bedeuten, wobei die R′ bevorzugt ein Wasserstoffatom sind ;

B ist ein Chlor- oder ein Fluoratom, bevorzugt ein Chloratom ;

D ist ein Phenylenrest, der durch 1 oder 2 Substituenten aus der Gruppe Chlor, Brom, Alkyl von 1 bis 4 C-Atomen, wie Methyl, Alkoxy von 1 bis 4 C-Atomen, wie Methoxy und Ethoxy, Carboxy und Sulfo substituiert sein kann, oder ist ein Naphthylenrest, wie insbesondere ein in 2-Stellung mit der Azogruppe verbundener Naphthylenrest, der durch 1 oder 2 Sulfogruppen substituiert sein kann ;

Y ist die Vinylgruppe oder eine Ethylgruppe, die in β-Stellung durch einen alkalisch eliminierbaren Substituenten substituiert ist, wie beispielsweise durch eine Sulfato-, Phosphato-, Thiosulfato-, Dimethylamino- oder Diethylaminogruppe oder ein Chloratom ;

K ist ein Rest der allgemeinen Formel (3a) oder (3b)

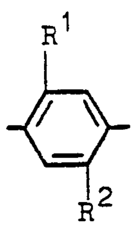

(3a)

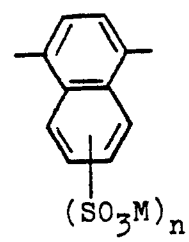

(3b)

in welchen

$R^1$ ein Wasserstoffatom, eine Alkylgruppe von 1 bis 4 C-Atomen, wie die Ethylgruppe und insbesondere Methylgruppe, eine Alkoxygruppe von 1 bis 4 C-Atomen, wie die Ethoxygruppe und insbesondere Methoxygruppe, eine Sulfogruppe oder eine Carboxygruppe ist,

$R^2$ eine Alkylgruppe von 1 bis 4 C-Atomen, wie die Ethylgruppe und insbesondere Methylgruppe, eine Alkoxygruppe von 1 bis 4 C-Atomen, wie die Ethoxygruppe und insbesondere Methoxygruppe, die Phenoxygruppe, eine Alkanoylaminogruppe von 2 bis 5 C-Atomen, die durch ein Chlor- oder Bromatom substituiert sein kann, wie die Acetylamino-, Propionylamino- und β-Chlorpropionylamino-Gruppe, die Benzoylaminogruppe, eine im Benzolkern durch 1 oder 2 Substituenten aus der Gruppe Chlor, Sulfo, Carboxy, Methyl und Nitro substituierte Benzoylaminogruppe, wie die 3-Nitrobenzoylamino-Gruppe, die Benzolsulfonylaminogruppe, eine im Benzolkern durch 1 oder 2 Substituenten aus der Gruppe Chlor, Sulfo, Carboxy und Methyl substituierte Benzolsulfonylaminogruppe, wie die 4-Methylbenzolsulfonylamino-Gruppe, die Ureido- oder die N′-Phenyl-ureido-Gruppe bedeutet,

M ein Wasserstoffatom oder ein Alkalimetall, wie Natrium, Kalium oder Lithium, ist und

n für die Zahl Null, 1 oder 2 steht (wobei im Falle von n gleich Null diese Gruppe ein Wasserstoffatom darstellt).

Die einzelnen Formelglieder können zueinander gleiche oder voneinander verschiedene Bedeutungen haben. Insbesondere können die jeweils zweifach auftretenden Formelglieder eine zueinander gleiche oder eine voneinander verschiedene Bedeutung haben ; bevorzugt haben die Formelrestpaare, B, D, K und Y jeweils eine zueinander gleiche Bedeutung.

Im vorstehenden sowie im nachstehenden bedeuten Sulfogruppen Gruppen entsprechend der allgemeinen Formel —$SO_3M$, des weiteren Carboxygruppen Gruppen der allgemeinen Formel —COOM, Phosphatogruppen Gruppen der allgemeinen Formel —$OPO_3M_2$, Thiosulfatogruppen Gruppen der allgemeinen Formel —S—$SO_3M$ und Sulfatogruppen Gruppen der allgemeinen Formel —$OSO_3M$, jeweils mit M der obengenannten Bedeutung.

Die erfindungsgemäßen Azoverbindungen können in Form ihrer freien Säure und bevorzugt in Form ihrer Alkalisalze, insbesondere der neutralen Salze, vorliegen. Sie finden bevorzugt in Form dieser Salze ihre Verwendung zum Färben und Bedrucken von hydroxy- und/oder carbonamidgruppenhaltigen Fasermaterialien.

Die vorliegende Erfindung betrifft weiterhin Verfahren zur Herstellung der Azoverbindungen der allgemeinen Formel (1). Diese sind dadurch gekennzeichnet, daß man 1 Molekül einer Bis-dihalogenotriazinylamino-Verbindung der allgemeinen Formel (4)

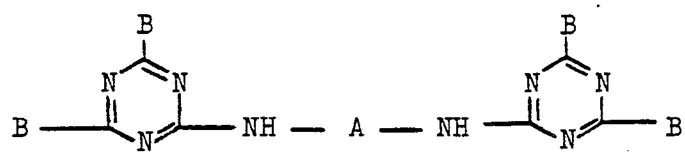

(4)

in welcher A und B die obengenannten Bedeutungen haben und beide Formelglieder B eine zueinander gleiche Bedeutung besitzen, mit 2 Molekülen einer Aminoverbindung der allgemeinen Formel (5)

$$H_2N—K—N=N—D—SO_2—Y \quad (5)$$

in welcher D, K und Y die obengenannten Bedeutungen haben, oder mit je 1 Molekül von zwei verschiedenen Aminoverbindungen der allgemeinen Formel (5) in an und für sich bekannter Verfahrensweise der Umsetzung von Aminoverbindungen mit Dihalogentriazin-Verbindungen kondensiert, oder daß man 2 Moleküle einer Dihalogentriazinylamino-Verbindung der allgemeinen Formel (6)

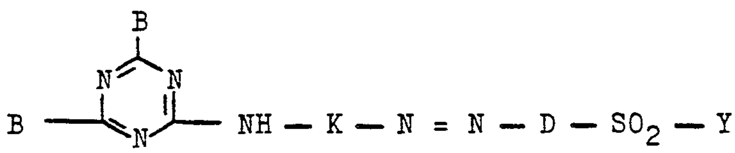

(6)

in welcher B, D, K und Y die obengenannten Bedeutungen haben und beide Formelglieder B eine zueinander gleiche Bedeutung besitzen, oder je 1 Molekül von zwei verschiedenen Verbindungen der allgemeinen Formel (6) mit 1 Molekül einer Diaminoverbindung der allgemeinen Formel (7)

$$H_2N—A—NH_2 \quad (7)$$

in welcher A die obengenannte Bedeutung besitzt, in an und für sich bekannter Verfahrensweise der Umsetzung von Aminoverbindungen mit Dihalogentriazin-Verbindungen kondensiert.

Die als Ausgangsverbindungen dienenden Aminoazoverbindungen der allgemeinen Formel (5) sind bekannt; man gewinnt sie in üblicher Weise durch Diazotierung der Aminoverbindung der allgemeinen Formel $H_2N—D—SO_2—Y$ mit D und Y der obengenannten Bedeutung und Kupplung auf eine Verbindung der allgemeinen Formel H—K—$NH_2$. Die Ausgangsverbindungen der allgemeinen Formel (4) gewinnt man nach an and für sich bekannten Verfahrensweisen durch Umsetzung einer Diaminoverbindung der allgemeinen Formel (7) mit Cyanurfluorid oder Cyanurchlorid. Gleichermaßen erhält man die Ausgangsverbindungen der allgemeinen Formel (6) nach an und für sich bekannten Verfahrensweisen durch Umsetzung von Cyanurfluorid oder Cyanurchlorid mit einer Aminoazoverbindung der allgemeinen Formel (5).

Die Kondensationsreaktionen zwischen den Dihalogenotriazinylaminoverbindungen der allgemeinen Formel (4) oder (6) mit den Diaminoverbindungen der allgemeinen Formel (7) erfolgen in üblicher Verfahrensweise, wie sie für diesen Reaktionstyp in der Literatur beschrieben ist, so beispielsweise im wäßrigen oder wäßrig-organischen Medium (wobei die organische Komponente bevorzugt Aceton, Toluol und Ethylenchlorid ist) bei einem pH-Wert zwischen 2 und 6 und bei einer Temperatur zwischen 20 und 60 °C. Die Ausgangsverbindungen, die zur Herstellung der erfindungsgemäßen Verbindungen dienen, sind zahlreich in der Literatur beschrieben oder können analog solchen in der Literatur beschriebenen Verbindungen mit den entsprechenden, analogen Vorstufen hergestellt werden. Solche Umsetzungen von aromatischen Aminen mit Cyanurhalogeniden sind beispielsweise in der deutschen Patentschrift Nr. 485 185 sowie in K. Venkataraman, The Chem. of Synth. Dyes, Acad. Press N.Y., Band VI, S. 124-142 (1972), und in H.R. Schweizer, Künstl. Org. Farbstoffe und ihre Zwischenprodukte, Springer Verlag Göttingen/Heidelberg, Seiten 488 und 498 (1964), beschrieben.

In den erfindungsgemäßen Verbindungen der allgemeinen Formel (1) ist D bevorzugt ein unsubstituierter Phenylenrest oder ein durch eine Methoxygruppe substituierter Phenylenrest oder ein in 2-Stellung mit der Azogruppe verbundener Naphthylenrest. Die faserreaktive Gruppe der Formel $-SO_2-Y$ ist in den allgemeinen Formeln (1), (5) und (6) bevorzugt in meta- oder para-Stellung zur Azogruppe an den Benzolkern gebunden und am 2-Azo-Naphthylenrest bevorzugt in 6-Stellung. Bevorzugt ist Y die Vinylgruppe und insbesondere die β-Sulfatoethyl-Gruppe.

Bevorzugt ist in den erfindungsgemäßen Verbindungen der Formelrest K ein Rest der allgemeinen Formel (3a), in welcher $R^1$ ein Wasserstoffatom, die Methyl- oder Methoxygruppe ist und $R^2$ die Methoxy-, Acetylamino- oder Ureidogruppe bedeutet.

Die Abscheidung und Isolierung der erfindungsgemäß hergestellten Verbindungen der allgemeinen Formel (1) aus den Syntheselösungen erfolgt nach allgemein bekannten Methoden, so beispielsweise durch Ausfällen aus dem Reaktionsmedium mittels Elektrolyten oder durch Eindampfen der Reaktionslösung, wie beispielsweise durch Sprühtrocknung, wobei der Syntheselösung zuvor jeweils Puffersubstanzen zugefügt werden können.

Die erfindungsgemäßen Verbindungen haben Farbstoffeigenschaften. Infolge der faserreaktiven Gruppen, die sie besitzen, können sie auch als faserreaktive Farbstoffe Verwendung finden. Sie können nach an und für sich üblichen und bekannten Verfahrensweisen der Applikation und Fixierung von faserreaktiven Farbstoffen auf hydroxygruppenhaltigen und/oder carbonamidgruppenhaltigen Materialien, insbesondere Fasermaterialien, zum Färben (einschließlich Bedrucken) eingesetzt werden, so beispielsweise von Wolle, synthetischen Polyamidfasern, insbesondere jedoch von Cellulosefasermaterialien, wie Baumwolle. Solche Verfahrensweisen sind zahlreich in der Fachliteratur, wie auch Patentliteratur, so beispielsweise in der deutschen Offenlegungsschrift Nr. 3 440 265, beschrieben.

Die vorliegende Erfindung betrifft somit auch die Verwendung der erfindungsgemäßen Verbindungen zum Färben (einschließlich Bedrucken von hydroxygruppenhaltigem und/oder carbonamidgruppenhaltigen Materialien, insbesondere Fasermaterialien, bzw. ein Verfahren zum Färben (einschließlich Bedrucken) von solchen Materialien, bei welchem man eine erfindungsgemäße Verbindung aus bevorzugt wäßriger Lösung auf das Material aufbringt und sie auf dem Material mittels Wärme und/oder mit Hilfe eines säurebindenden Mittels — beim Färben von hydroxygruppenhaltigen Materialien vorzugsweise bei einem pH-Wert zwischen 8 und 11 und bei einer Temperatur zwischen 15 und 120 °C, vorzugsweise zwischen 20 und 80 °C, — fixiert.

Die erfindungsgemäßen Verbindungen haben zudem den großen Vorteil, wie anfangs bereits erwähnt, daß sie hydroxygruppenhaltige Fasermaterialien, wie Cellulosefasermaterialien, aus wäßriger Flotte, wie bevorzugt im wäßrigen Färbebad nach einem Ausziehverfahren, bereits in einem schwach sauren pH-Bereich von 5 und größer als 5, wie bei einem pH-Wert zwischen 5 und 7, d. h. überraschenderweise in Abwesenheit von alkalisch wirkenden Substanzen, gegebenenfalls jedoch in Gegenwart eines üblichen säurebindenden Puffergemisches zur Einstellung und Einhaltung des pH-Bereiches und ggf. in Gegenwart üblicher Färbehilfsmittel, bei einer Temperatur zwischen 100 und 150 °C, bevorzugt bei einer Temperatur von 120 bis 135 °C, zu färben vermögen und auf diesen Materialien echt fixieren. Solche Puffer sind bspw. wäßrige Lösungen von Phosphorsäure/Natriumphosphat und Essigsäure/Natriumacetat.

Unter diesen Färbebedingungen der Hochtemperatur-Neutral-Färbeweise, die an und für sich bekannt sind (s. deutsche Auslegeschrift Nr. 2 835 035) und die im wesentlichen den Färbebedingungen des Färbens von Polyesterfasern oder anderen synthetischen Fasern, wie Cellulosetriacetatfasern, mit Dispersionsfarbstoffen entsprechen, ist es möglich, Cellulose-Mischfasermaterial, wie Cellulose-Cellulosetriacetatfaser und Cellulose-Polyacrylnitrilfaser- und insbesondere Cellulose-Polyester-Mischfasermaterialien, mit einem üblichen Dispersionsfarbstoff gleichzeitig und zusammen mit einem faserreaktiven Farbstoff, nämlich einer erfindungsgemäßen Azoverbindung, aus einer gemeinsamen wäßrigen Färbeflotte ohne das ansonsten bestehende Risiko der Schädigung des Dispersionsfarbstoffes als auch der synthetischen Faser, wie Polyesterfaser, in einem einstufigen Verfahren mit Vorteil gleichmäßig und echt und gewünschtenfalls Ton-in-Ton zu färben.

Die vorliegende Erfindung betrifft somit auch ein Verfahren zum Färben von Mischfasermaterialien aus Cellulose und synthetischen Fasern, bevorzugt von Cellulose-Polyester-Fasergemischen, mit einem (oder mehreren) Dispersionsfarbstoff(en) und einem oder mehreren erfindungsgemäßen Farbstoff(en) durch Einwirkung dieser Farbstoffe auf das Fasermaterial aus wäßriger Färbeflotte, bevorzugt aus wäßrigem Färbebad, bei einer Temperatur zwischen 100 und 150 °C, bevorzugt bei einer Temperatur von 120 bis 135 °C, und bei einem pH-Wert zwischen 4 und 8, erforderlichenfalls zwischen 5 bis 7,5, bevorzugt zwischen 5 und 7.

Mit dieser erfindungsgemäßen Färbeweise werden die synthetischen Fasern, wie Polyesterfasern, durch den Dispersionsfarbstoff und die Cellulosefasern durch die faserreaktive erfindungsgemäße Azoverbindung in der gewünschten guten Qualität gefärbt (hierbei erfolgt keine Anfärbung der synthetischen Faser, wie Cellulosetriacetat und Polyesterfaser, durch die erfindungsgemäßen Azoverbindungen). Die Qualität der Färbung der synthetischen Fasern ist durch den Dispersionsfarbstoff bedingt und entspricht dem Stand der Technik. Überraschenderweise besitzen die Cellulosefasermaterialien, die unter diesen Bedingungen der Färbeweise für Dispersionsfarbstoffe mit den erfindungsgemäßen Azoverbindungen gefärbt wurden, neben einer klaren Nuance beachtliche Echtheitseigenschaften (diese Echtheitseigenschaften sind in jedem Falle vorhanden, wenn die erfindungsgemäßen Azoverbindungen

auf den Cellulosefasermaterialien nach den üblichen Verfahrensweisen der Applikation und Fixierung für faserreaktive Farbstoffe im alkalischen Bereich angewendet werden). Von den guten Gebrauchs- und Fabrikationsechtheiten sind insbesondere die guten Lichtechtheiten sowohl der trockenen als auch der feuchten, mit Trinkwasser oder einer alkalischen Schweißlösung imprägnierten Cellulosefärbung, weiterhin von den Naßechtheiten insbesondere die guten Wasch-, Wasser-, Seewasser-, Überfärbe- und Schweißechtheiten sowie die gute Säurelagerbeständigkeit und ebenfalls die guten Plissier-, Bügelecht-, Reib- und Sublimierechtheiten Färbungen auf Cellulosefasematerialien hervorzuheben, die mit den erfindungsgemäßen Azoverbindungen nicht nur bei Anwendung der Verfahrensweisen für faserreaktive Farbstoffe, sondern auch bei Anwendung der Färbeweisen für Dispersionsfarbstoffe erhältlich sind.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säuren geschrieben ; im allgemeinen werden sie in Form ihrer Alkalimetallsalze hergestellt und isoliert und in Form dieser Salze zum Färben verwendet. Ebenso können die in den Beispielen, insbesondere Tabellenbeispielen, in Form der freien Säuren genannten Ausgangsverbindungen und Komponenten als solche oder in Form ihrer Salze, vorzugsweise Alkalimetallsalze, wie Natrium- oder Kaliumsalze, in die Synthese eingesetzt werden.

Die in den Beispielen für die erfindungsgemäßen Azoverbindungen im sichtbaren Bereich genannten Absorptionsmaxima ($\lambda_{max}$-Werte) wurden anhand deren Alkalisalze aus wäßriger Lösung ermittelt.

## Beispiel 1

a) Eine neutrale Lösung von 56,2 Teilen 4-β-Sulfatoethylsulfonyl-anilin in 200 Teilen Wasser wird mit 200 Teilen Eis und 70 Volumenteilen einer konzentrierten wäßrigen Salzsäure versetzt und in üblicher Weise mit 26 Teilen einer wäßrigen 39 %igen Natriumnitritlösung diazotiert. Die anschließende Kupplung erfolgt durch langsame Zugabe von etwa 550 Teilen einer sauren Lösung von 30 Teilen 3-Amino-acetanilid, wobei der Kupplungsansatz auf einen pH-Wert von 1,5 gestellt und bis zur Beendigung der Kupplungsreaktion mehrere Stunden gerührt wird. Die ausgefallene, gebildete Azoverbindung wird abgesaugt, mit 100 Teilen einer wäßrigen 2n-Salzsäure gewaschen und mittels 13 Teilen Natriumbicarbonat bei 50 °C in 500 Teilen Wasser gelöst.

b) In einem getrennten Ansatz wird eine Lösung aus 37 Teilen 4,4'-Diamino-stilben-2,2'-disulfonsäure mit 17 Volumenteilen einer wäßrigen 32 %igen Natronlauge in 200 Teilen Wasser innerhalb von 15 Minuten unter gutem Rühren Langsam in ein Gemisch von 250 Teilen Eis, 250 Teilen Wasser, 41 Teilen Cyanurchlorid und ca. 0,5 Teilen eines handelsüblichen Dispergiermittels gegeben. Der Ansatz wird mit Natriumbicarbonat auf einen pH-Wert zwischen 5 und 6 eingestellt und noch 2 Stunden nachgerührt.

c) Das unter b) hergestellte primäre Kondensationsprodukt des Cyanurchlorids wird mit der unter a) hergestellten Lösung der Monoazoverbindung vereinigt ; man rührt den Ansatz bei 40 bis 50 °C und einem pH-Wert zwischen 4 und 5 mehrere Stunden, bis kein Alkali mehr verbraucht wird. Die erfindungsgemäße Disazoverbindung wird sodann durch Aussalzen mit Kaliumchlorid oder Natriumchlorid isoliert.

Es wird ein gelbes, elektrolythaltiges Pulver des Alkalisalzes der Verbindung der Formel

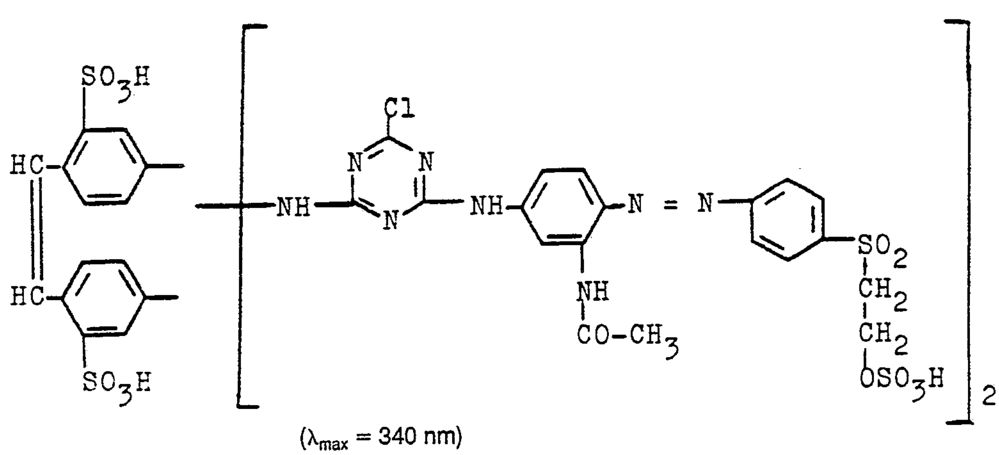

($\lambda_{max}$ = 340 nm)

erhalten. Die erfindungsgemäße Verbindung zeigt sehr gute faserreaktive Farbstoffeigenschaften und liefert auf carbonamidgruppenhaltigen und insbesondere hydroxygruppenhaltigen Fasermaterialien, wie insbesondere Cellulosefasermaterialien, nach den für faserreaktive Farbstoffe üblichen Applikations- und

Fixiermethoden farbstarke gelblich braune Färbungen und Drucke mit guten Echtheiten. Jedoch liefert die erfindungsgemäße Verbindung nicht nur in Färbeverfahren in Gegenwart von alkalisch wirkenden Mitteln, wie beispielsweise im Ausziehverfahren bei einer Färbetemperatur von 40 bis 80 °C, auf Cellulosefasermaterialien die genannten qualitativ guten Färbungen, sondern sie vermag auch in Abwesenheit eines alkalisch wirkenden oder säurebindenden Mittels, nämlich bei einem pH-Wert zwischen 5 und 7 und bei einer Temperatur zwischen 100 und 150 °C, wie insbesondere zwischen 110 und 130 °C, bspw. im Ausziehverfahren, auf Cellulosefasermaterialien zu fixieren.

Sowohl im Ausziehverfahren unter Zusatz von alkalisch wirkenden Mitteln bei 40 bis 80 °C als auch im Ausziehverfahren im schwach sauren bis neutralen Bereich bei einer Temperatur zwischen 110 bis 130 °C werden farbstarke Färbungen auf den Cellulosefasermaterialien erhalten, die gleich gute Echtheitseigenschaften aufweisen, wie z. B. eine gute Lichtechtheit der Färbung in trockenem oder in dem mit Trinkwasser oder einer alkalischen Schweißlösung imprägnierten Zustand, gute Waschechtheiten, gute Schweißechtheiten, gute Überfärbeechtheiten, eine gute Abgasechtheit (Stickoxidechtheit), eine gute Echtheit gegen chlorhaltige Agentien (wie Chlorbadewasserechtheit und Hypochloritbleichechtheit) und eine gute Säurelagerbeständigkeit.

Beispiel 2

Man diazotiert in üblicher Weise 72,2 Teile 4-β-Sulfatoethylsulfonyl-2-sulfo-anilin und kuppelt es mit 30 Teilen 3-Amino-acetanilid. Man salzt die gebildete Azoverbindung aus, filtriert sie ab und löst sie wiederum in Wasser und setzt sie analog dem Beispiel 1b) mit Cyanurchlorid bei einem pH-Wert zwischen 4 und 5 um. Der Reaktionsansatz wird anschließend geklärt und filtriert und das Filtrat unter gutem Rühren mit einer Lösung von 10 Teilen 1,4-Diaminobenzol in 24 Teilen einer konzentrierten wäßrigen Salzsaüre und 150 Teilen Wasser versetzt. Das Reaktionsgemisch wird auf 50 °C erwärmt und eine Stunde bei dieser Temperatur und bei einem pH-Wert zwischen 4,5 und 5,5 unter Rühren umgesetzt, sodann eingedampft oder sprühgetrocknet.

Es wird ein gelbes, elektrolytsalzhaltiges Pulver des Alkalisalzes (Natriumsalzes) der Verbindung der Formel

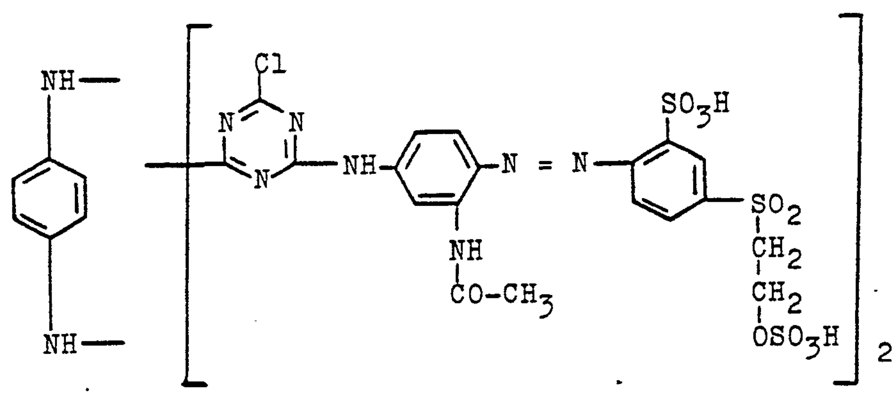

($\lambda_{max}$ = 400 nm)

erhalten. Diese erfindungsgemäße Verbindung zeigt sehr gute faserreaktive Farbstoffeigenschaften und färbt Cellulosefasermaterialien sowohl nach den üblichen Verfahren für faserreaktive Farbstoffe unter Zusatz von Alkali als Fixiermittel, wie im alkalisch eingestellten wäßrigen Färbebad bei einer Temperatur zwischen 40 und 80 °C, als auch im schwach sauren bis neutralen Medium bei einer Temperatur von oberhalb 100 °C, wie in einem wäßrigen Färbebad bei einem pH-Wert zwischen 5 und 7 und einer Temperatur zwischen 110 und 130 °C, in farbstarken rotstichig gelben Tönen mit guten Echtheitseigenschaften; von diesen guten Echtheiten können beispielsweise die Lichtechtheiten der Färbungen in trockenem und im mit Trinkwasser oder einer alkalischen Schweißlösung imprägnierten Zustand, die Wasch-, Schweiß-, Überfärbe-, Abgas-, Chlorwasser- und Hypochloritbleichechtheiten und die gute Säurelagerbeständigkeit der Färbungen genannt werden.

Beispiel 3

Man setzt analog der Verfahrensweise des Beispieles 1 eine neutrale Lösung von 8,6 Teilen 4,4'-Diamino-diphenyl-3,3'-disulfonsäure bei einem pH-Wert von 3 und einer Temperatur von etwa 0 bis 10 °C mit 10 Teilen Cyanurchlorid und das so erhaltene Dichlortriazin-Monokondensationsprodukt anschließend in wäßriger Lösung bei einer Temperatur von 60 °C und einem pH-Wert von 5 mit 22 Teilen 2-Ureido-4-amino-4'-(β-sulfatoethylsulfonyl)-azobenzol um. Die erhaltene erfindungsgemäße Disazoverbindung wird mit Kaliumchlorid ausgesalzen und in üblicher Weise isoliert.

Man erhält ein gelbbraunes elektrolythaltiges Pulver des Alkalisalzes (vorwiegend Kaliumsalzes) der Verbindung der Formel

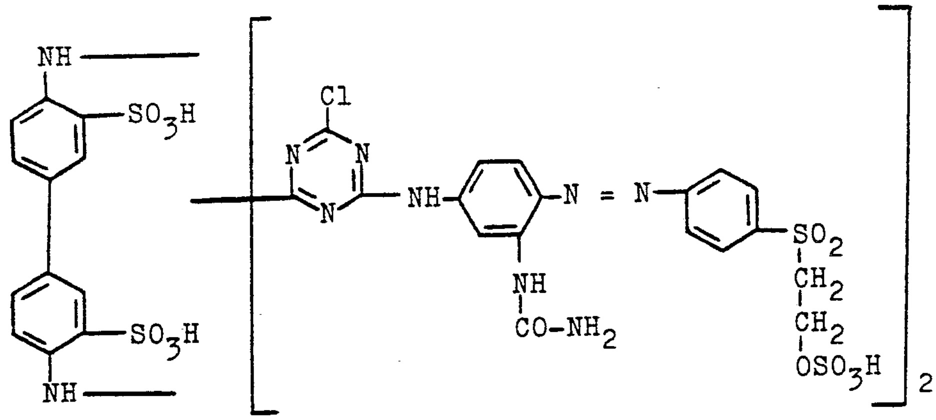

erhalten. Die erfindungsgemäße Disazoverbindung zeigt sehr gute faserreaktive Farbstoffeigenschaften und färbt Cellulosefasermaterialien sowohl nach den üblichen Verfahren für faserreaktive Farbstoffe unter Zusatz von Alkali als Fixiermittel, wie im alkalisch eingestellten wäßrigen Färbebad bei einer Temperatur zwischen 40 und 80 °C, als auch im schwach sauren bis neutralen Medium bei einer Temperatur von oberhalb 100 °C, wie in einem wäßrigen Färbebad bei einem pH-Wert zwischen 5 und 7 und einer Temperatur zwischen 110 und 130 °C, in farbstarkengelbstichig braunen Tönen mit guten Echtheitseigenschaften; von diesen guten Echtheiten können beispielsweise die Lichtechtheiten der Färbungen in trockenem und im mit Trinkwasser oder einer alkalischen Schweißlösung imprägnierten Zustand, die Wasch-, Schweiß-, Überfärbe-, Abgas-, Chlorwasser- und Hypochloritbleichechtheiten und die gute Säurelagerbeständigkeit der Färbungen genannt werden.

## Beispiele 4 bis 42

Mit den nachfolgenden Tabellenbeispielen werden weitere erfindungsgemäße Disazoverbindungen entsprechend der oben genannten allgemeinen Formel (1) mit Hilfe derer Komponenten beschrieben. Sie lassen sich in erfindungsgemäßer Weise, so beispielsweise nach einem der obigen Ausführungsbeispiele, herstellen und liefern beispielsweise auf Cellulosefasermaterialien, wie Baumwolle, nach den für faserreaktive Farbstoffe üblichen Applikations- und Fixierverfahren farbstarke echte Färbungen und Drucke mit den für das jeweilige Tabellenbeispiel angegebenen Farbton. Färbungen auf Cellulosefasermaterialien mit gleich guten Farbstärken und gleich guten Echtheiten werden ebenso bei den Färbebedingungen für das Färben von Polyesterfasern mit Dispersionsfarbstoffen, wie beispielsweise aus wäßrigem Bad bei einer Temperatur zwischen 100 und 130 °C und einem pH-Wert zwischen 5 und 7, gegebenenfalls unter Zusatz eines Elektrolytsalzes, wie Natriumsulfat oder Natriumchlorid, erhalten

(Siehe Tabellen Seite 9 ff.)

| Bsp. | Azoverbindungen der allgemeinen Formel (1) mit ... Komponente A | B | Rest K | Diazorest $-D-SO_2-X$ | Nuance auf Baumwolle |
|---|---|---|---|---|---|
| 4 | 1,4-Phenylen | Cl | 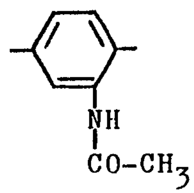 | 6-(ß-Sulfatoethylsulfonyl)-1-sulfo-naphth-2-yl | rotstichig gelb |
| 5 | dito | Cl | dito | 8-(ß-Sulfatoethylsulfonyl)-6-sulfo-naphth-2-yl | rotstichig gelb (388 nm) |
| 6 | dito | Cl | 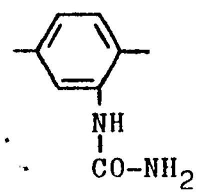 | 4-(ß-Sulfatoethylsulfonyl)-phenyl | rotstichig gelb (362 nm) |
| 7 | 2-Sulfo-1,4-phenylen | Cl | dito | dito | rotstichig gelb (396 nm) |
| 8 | 2,5-Disulfo-1,4-phenylen | Cl | dito | dito | rotstichig gelb (390 nm) |
| 9 | 2,2'-Disulfo-4,4'-diphenylen | Cl | dito | dito | rotstichig gelb (392 nm) |
| 10 | dito | F | dito | dito | rotstichig gelb (396 nm) |

| Bsp. | Azoverbindungen der allgemeinen Formel (1) mit ... | | | | Nuance auf |
|---|---|---|---|---|---|
| | Komponente A | B | Rest K | Diazorest $-D-SO_2-X$ | Baumwolle |
| 11 | 2,2-Disulfo-4,4'-diphenylen | F | 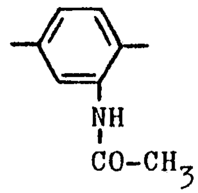 | 4-(ß-Sulfatoethylsulfonyl)-phenyl | rotstichig gelb |
| 12 | 3,3'-Disulfo-4,4'-diphenylen | F | dito | dito | rotstichig gelb |
| 13 | dito | Cl | dito | dito | rotstichig gelb |
| 14 | dito | Cl | 1,4-Naphthylen | dito | braun |
| 15 | dito | Cl | 6-/7-Monosulfo-1,4-naphthylen | dito | braun |
| 16 | 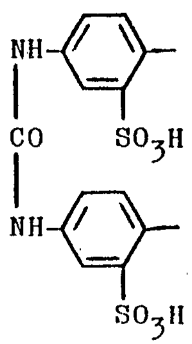 | Cl | dito | dito | braun |

| Bsp. | Azoverbindungen der allgemeinen Formel (1) mit ... Komponente A | B | Rest K | Diazorest $-D-SO_2-X$ | Nuance auf Baumwolle |
|---|---|---|---|---|---|
| 17 | dito | Cl | 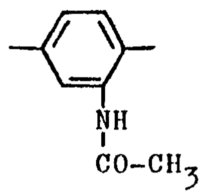 | 4-(ß-Sulfatoethylsulfonyl)-phenyl | braun |
| 18 | dito | F | dito | dito | braun |
| 19 | dito | F | 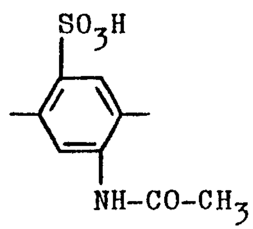 | dito | braun |
| 20 | dito | Cl | 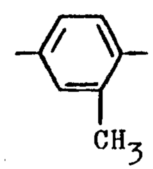 | dito | braun |
| 21 | 1,2-Ethylen | Cl | dito | dito | braun |

| Bsp. | Azoverbindungen der allgemeinen Formel (1) mit ... Komponente A | B | Rest K | Diazorest $-D-SO_2-X$ | Nuance auf Baumwolle |
|---|---|---|---|---|---|
| 22 | 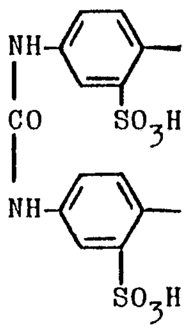 | F | 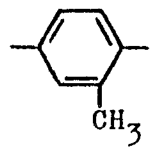 | 4-(ß-Sulfatoethylsulfonyl)-phenyl | braun |
| 23 | dito | F | 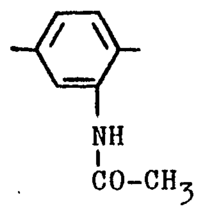 | dito | braun |
| 24 | 1,4-Phenylen | F | 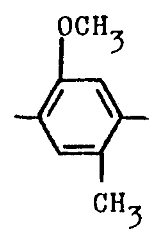 | dito | gelbbraun |
| 25 | dito | F | 6-/7-Monosulfo-1,4-naphthylen | 4-Vinylsulfonyl-phenyl | gelbbraun |

| Bsp. | Azoverbindungen der allgemeinen Formel (1) mit ... Komponente A | B | Rest K | Diazorest $-D-SO_2-X$ | Nuance auf Baumwolle |
|---|---|---|---|---|---|
| 26 | 1,4-Phenylen | F | 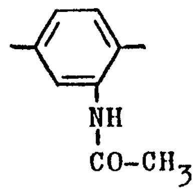 | 4-(ß-Sulfatoethylsulfonyl)-phenyl | rotstichig gelb (400 nm) |
| 27 | dito | F | dito | 2-Methoxy-5-vinylsulfonyl-phenyl | rotstichig gelb |
| 28 | dito | Cl | dito | 2,5-Dimethoxy-4-(ß-sulfato-ethylsulfonyl)-phenyl | braun |
| 29 | dito | Cl | dito | 2-Brom-4-(ß-sulfatoethyl-sulfonyl)-phenyl | gelbbraun |
| 30 | 2,5-Disulfo-1,4-phenylen | Cl | dito | dito | gelbbraun |
| 31 | dito | F | dito | 4-(ß-Sulfatoethylsulfonyl)-phenyl | rotstichig gelb (392 nm) |
| 32 | dito | F | 1,4-Naphthylen | dito | braun |
| 33 | dito | Cl | dito | dito | braun |

| Bsp. | Azoverbindungen der allgemeinen Formel (1) mit ... Komponente A | B | Rest K | Diazorest $-D-SO_2-X$ | Nuance auf Baumwolle |
|---|---|---|---|---|---|
| 34 | 2,5-Disulfo-1,4-phenylen | Cl | 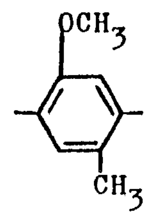 | 4-(ß-Sulfatoethylsulfonyl)-phenyl | braun |
| 35 | dito | F | dito | dito | braun |
| 36 | 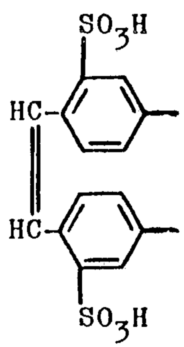 | F | 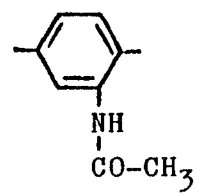 | dito | rotstichig gelb (342 nm) |
| 37 | dito | F | 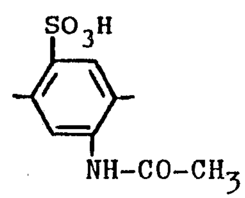 | 2-Methoxy-5-vinylsulfonyl-phenyl | rotstichig gelb |
| 38 | dito | Cl | 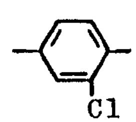 | dito | rotstichig gelb |

| Bsp. | Komponente A | B | Rest K | Diazorest $-D-SO_2-X$ | Nuance auf Baumwolle |
|---|---|---|---|---|---|
| | Azoverbindungen der allgemeinen Formel (1) mit ... | | | | |
| 39 | dito | Cl | 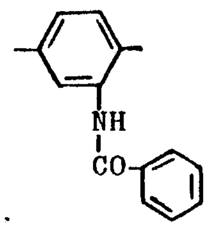 | dito | rotstichig gelb |
| 40 | 3,3-Dimethoxy-4,4'-diphenylen | Cl | 6-/7-Monosulfo-1,4-naphthylen | dito | braun |
| 41 | 2-Sulfo-1,4-phenylen | Cl | 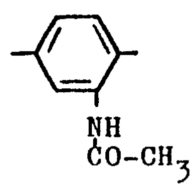 | 8-(ß-Sulfatoethylsulfonyl)-6-sulfo-naphth-2-yl | rotstichig gelb (386 nm) |
| 42 | 3,3'-Disulfo-4,4'-diphenylen | Cl | 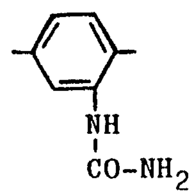 | 4-(ß-Sulfatoethylsulfonyl)-phenyl | gelbbraun (394 nm) |

Färbebeispiel 1

50 Teile eines Baumwollgewebes gibt man in ein Färbebad aus 1 Teil der erfindungsgemäßen Disazoverbindung von Beispiel 2 (in Form des neutralen Salzes), 50 Teilen wasserfreiem Natriumsulfat, 800 Teilen Wasser und 200 Teilen einer wäßrigen Pufferlösung, die aus 200 Teilen Wasser und 20 Teilen 85 %iger Phosphorsäure zubereitet und mit Natronlauge auf einen pH-Wert von 6 gestellt wird. Das Gewebe wird in dem Bad bei einer Temperatur von 130 °C während 90 Minuten unter ständiger Bewegung behandelt. Anschließend wird die erhaltene Färbung durch Spülen mit warmem und mit heißem Wasser, durch Waschen in einem wäßrigen Bad aus 1500 Teilen Wasser und 1,5 Teilen eines nichtionogenen Mittels bei Kochtemperatur während 15 Minuten und durch erneutes Spülen mit warmem Wasser nachbehandelt und getrocknet.

Es wird eine kräftige rotstichig gelbe Färbung erhalten, die die in Beispiel 2 genannten guten Echtheiten besitzt.

Führt man das Färbeverfahren nicht bei einem pH-Wert von 6, sondern bei einem pH-Wert von 5, von 7 oder 8 durch, so erhält man gleichgute rotstichig gelbe Färbungen mit praktisch gleicher Farbstärke wie bei der bei pH 6 hergestellten Färbung.

Färbebeispiel 2

Setzt man die erfindungsgemäße Disazoverbindung des Beispieles 2 zum Färben von Cellulosefasermaterial, wie Baumwollgewebe, nach einem für faserreaktive Farbstoffe üblichen Färbeverfahren ein, wie beispielsweise im Ausziehverfahren bei einer Temperatur von 60 °C oder 80 °C in Gegenwart eines alkalisch wirkenden Mittels, wie Natriumcarbonat und Natronlauge, und eines Elektrolytsalzes, wie Natriumsulfat, so erhält man ebenfalls sehr farbstarke rotstichig gelbe Färbungen mit den im Beispiel 2 genannten guten Echtheiten.

Färbebeispiel 3

100 Teile eines Mischgewebes aus gleichen Teilen Polyesterund Cellulosefasern wird in der üblichen Färbemethode für Polyesterfasern in 2 000 Teilen eines neutralen wäßrigen Bades mit einem Gehalt von 2 Teilen einer Handelsware von C.I. Disperse Orange 13 (Colour Index Nr. 26 080) und 2 Teilen des erfindungsgemäßen Disazofarbstoffes von Beispiel 8 90 Minuten bei 130 °C gefärbt. Man erhält ein egal und stark durchgefärbtes Gewebe von gleichmäßiger rotstichig gelber Tönung.

Führt man die Färbung nur mit dem Dispersionsfarbstoff durch, so werden lediglich die Polyester-Schußfäden gefärbt, so daß das Gewebe unegal, unruhig und schwach bräunlich gefärbt erscheint.

Einen ähnlichen Eindruck erweckt das gefärbte Gewebe, das man in gleicher Verfahrensweise erhält, wenn lediglich die erfindungsgemäße Disazoverbindung in das Färbebad eingesetzt wird, da in diesem Falle nur die aus Cellulosefasern bestehenden Kettfäden angefärbt werden.

## Patentansprüche

1. Wasserlösliche Verbindung entsprechend der allgemeinen Formel (1)

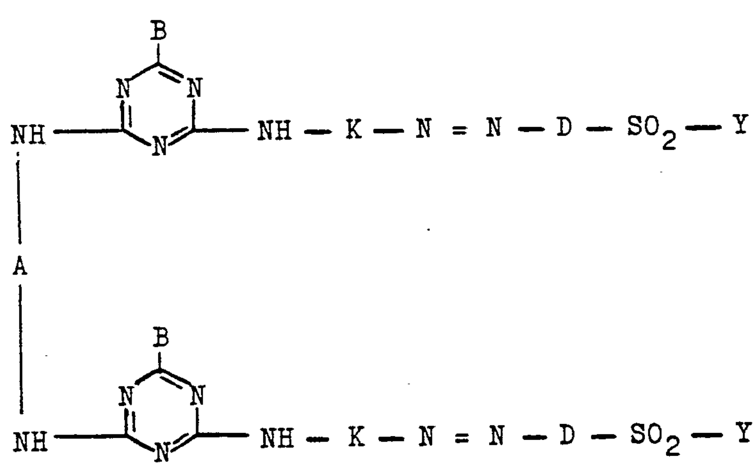

(1)

in welcher bedeuten :

A ist eine Alkylengruppe von 2 bis 6 C-Atomen oder ein Phenylenrest, der durch 1 oder 2 Substituenten substituiert sein kann, oder ist ein Rest der allgemeinen Formel (2)

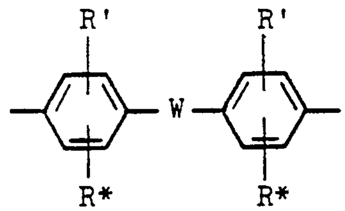

(2)

in welcher

W eine direkte Bindung oder ein Brückenglied ist und die R′ und R* jedes ein Wasserstoffatom, ein Chloratom, eine Methyl-, Methoxy-, Ethoxy-, Carboxy- oder Sulfogruppe bedeuten ;

B ist ein Chlor- oder ein Fluoratom ;

D ist ein Phenylenrest, der durch 1 oder 2 Substituenten aus der Gruppe Chlor, Brom, Alkyl von 1 bis 4 C-Atomen, Alkoxy von 1 bis 4 C-Atomen, Carboxy und Sulfo substituiert sein kann, oder ist ein Naphthylenrest, der durch 1 oder 2 Sulfogruppen substituiert sein kann ;

Y ist die Vinylgruppe oder eine Ethylgruppe, die in ß-Stellung durch einen alkalisch eliminierbaren Substituenten substituiert ist ;

K ist ein Rest der allgemeinen Formel (3a) oder (3b)

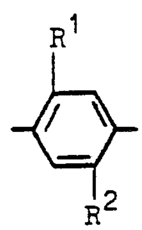

(3a)

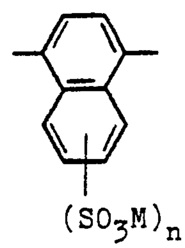

(3b)

in welchen

$R^1$ ein Wasserstoffatom, eine Alkylgruppe von 1 bis 4 C-Atomen, eine Alkoxygruppe von 1 bis 4 C-Atomen, eine Sulfogruppe oder eine Carboxygruppe ist,

$R^2$ eine Alkylgruppe von 1 bis 4 C-Atomen, eine Alkoxygruppe von 1 bis 4 C-Atomen, die Phenoxygruppe, eine Alkanoylaminogruppe von 2 bis 5 C-Atomen, die durch ein Chlor- oder Bromatom substituiert sein kann, die Benzoylaminogruppe, eine im Benzolkern durch 1 oder 2 Substituenten aus der Gruppe Chlor, Sulfo, Carboxy, Methyl und Nitro substituierte Benzoylaminogruppe, die Benzolsulfonylamino-Gruppe, eine im Benzolkern durch 1 oder 2 Substituenten aus der Gruppe Chlor, Sulfo, Carboxy und Methyl substituierte Benzolsulfonylaminogruppe, die Ureidogruppe oder die N′-Phenyl-ureido-Gruppe bedeutet ;

M ein Wasserstoffatom oder ein Alkalimetall ist und

n für die Zahl Null, 1 oder 2 steht.

2. Verbindung nach Anspruch 1, dadurch gekennzeichnet, daß die zweifach auftretenden Formelglieder jeweils die gleiche Bedeutung besitzen.

3. Verbindung nach Anspruch 1 oder 2, dadurch gekennzeichnet, daß die Formelglieder B jedes ein Chloratom bedeuten.

4. Verbindung nach Anspruch 1 oder 2 der allgemeinen Formel (1), in welcher

A eine Alkylengruppe von 2 bis 6 C-Atomen oder ein Phenylenrest, der durch 1 oder 2 Substituenten aus der Gruppe Alkoxy von 1 bis 4 C-Atomen, Alkyl von 1 bis 4 C-Atomen, Chlor, Sulfo und Carboxy substituiert sein kann, ist, oder

A ein Rest der allgemeinen Formel (2a)

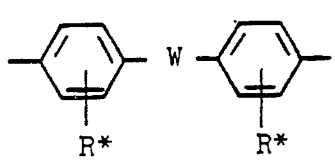

(2a)

ist, in welcher W eine direkte Bindung oder ein Brückenglied der Formel $—CH_2—$, $—CH_2—CH_2—$, $—O—CH_2—CH_2—O—$, —CH = CH—, —N ' N—, —NH—CO—NH— oder —CO—NH— ist und die R=, zueinander gleich oder voneinander verschieden, jedes ein Wasserstoffatom, ein Chloratom, eine Methyl-, Methoxy-, Ethoxy- oder Sulfogruppe bedeuten,

B ein Chloratom ist und

D, K und Y die in Anspruch 1 genannten Bedeutungen haben.

5. Verbindung nach mindestens einem der Ansprüche 1 bis 4, dadurch gekennzeichnet, daß der Formelrest D ein Phenylenrest ist, der durch 1 oder 2 Substituenten aus der Gruppe Chlor, Brom, Alkyl von 1 bis 4 C-Atomen, Alkoxy von 1 bis 4 C-Atomen, Carboxy und Sulfo substituiert sein kann.

6. Verbindung nach mindestens einem der Ansprüche 1 bis 5, dadurch gekennzeichnet, daß Y die Vinylgruppe oder eine β-Sulfatoethyl-, β-Phosphatoethyl-, β-Thiosulfatoethyl-, β-Dimethylamino-ethyl-, β-Diethylamino-ethyl- oder β-Chlorethyl-Gruppe ist.

7. Verbindung nach mindestens einem der Ansprüche 1 bis 5, dadurch gekennzeichnet, daß Y eine Vinylgruppe oder eine β-Sulfatoethyl-Gruppe ist.

8. Verbindung nach mindestens einem der Ansprüche 1 bis 4, 6 und 7, dadurch gekennzeichnet, daß D ein unsubstituierter Phenylenrest oder ein durch eine Methoxygruppe substituierter Phenylenrest ist.

9. Verfahren zur Herstellung einer in Anspruch 1 genannten und definierten Verbindung der allgemeinen Formel (1), dadurch gekennzeichnet, daß man 1 Mol einer Bis-dihalogenotriazinylamino-Verbindung der allgemeinen Formel (4)

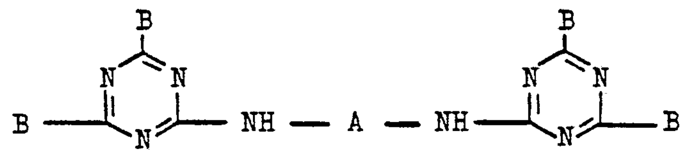

(4)

in welcher A und B die in Anspruch 1 genannten Bedeutungen haben und beide Formelglieder B eine zueinander gleiche Bedeutung besitzen, mit 2 Mol einer Aminoverbindung der allgemeinen Formel (5)

$$H_2N—K—N=N—D—SO_2—Y \qquad (5)$$

in welcher D, K und Y die in Anspruch 1 genannten Bedeutungen haben, oder mit je 1 Mol von zwei verschiedenen Aminoverbindungen der allgemeinen Formel (5) kondensiert, oder daß man 2 Mol einer Dihalogentriazinylamino-Verbindung der allgemeinen Formel (6)

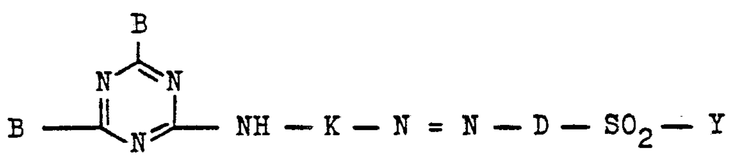

(6)

in welcher B, D, K und Y die in Anspruch 1 genannten Bedeutungen haben und beide Formelglieder B eine zueinander gleiche Bedeutung besitzen, oder je 1 Mol von zwei verschiedenen Dihalogentriazinylamino-Verbindungen der allgemeinen Formel (6) mit 1 Mol einer Diaminoverbindung der allgemeinen Formel (7)

$$H_2N—A—NH_2 \qquad (7)$$

in welcher A die in Anspruch 1 genannte Bedeutung besitzt, kondensiert.

10. Verwendung einer in Anspruch 1 genannten und definierten Verbindung der allgemeinen Formel (1) als Farbstoff.

11. Verwendung nach Anspruch 10 zum Färben von hydroxy und/oder carbonamidgruppenhaltigem Material, vorzugsweise Fasermaterial.

12. Verwendung nach Anspruch 11, dadurch gekennzeichnet, daß das Fasermaterial ein Cellulosefaser-Polyesterfaser-Gemisch oder ein Cellulosefaser-Celluloseacetatfaser-Gemisch ist.

13. Verfahren zum Färben (einschließlich Bedrucken) von hydroxy- und/oder carbonamidgruppenhaltigem Material, vorzugsweise Fasermaterial, bei welchem man einen Farbstoff auf das Material aus wäßriger Lösung aufbringt und ihn mittels Wärme und/oder mit Hilfe eines alkalisch wirkenden Mittels fixiert, dadurch gekennzeichnet, daß man als Farbstoff eine Verbindung von Anspruch 1 einsetzt.

14. Verfahren zum Färben von hydroxygruppenhaltigem Fasermaterial, vorzugsweise Cellulosefasermaterial, dadurch gekennzeichnet, daß man eine Verbindung von Anspruch 1 auf das Material in wäßriger Lösung aufbringt und sie aus der wäßrigen Lösung bei einem pH-Wert zwischen 4 und 8 und bei einer Temperatur zwischen 100 und 150 °C auf das Material einwirken läßt und auf dem Material fixiert.

15. Verfahren nach Anspruch 14, dadurch gekennzeichnet, daß man bei einem pH-Wert zwischen 5 und 7,5 färbt.

16. Verfahren nach Anspruch 14 oder 15, dadurch gekennzeichnet, daß man als Fasermaterial ein Cellulosefaser-Polyesterfaser-Gemisch oder ein Cellulosefaser-Cellulosetriacetatfaser-Gemisch einsetzt.

17. Verfahren nach Anspruch 16, dadurch gekennzeichnet, daß man zusätzlich einen Dispersionsfarbstoff einsetzt.

## Claims

1. A water-soluble compound of the general formula (1)

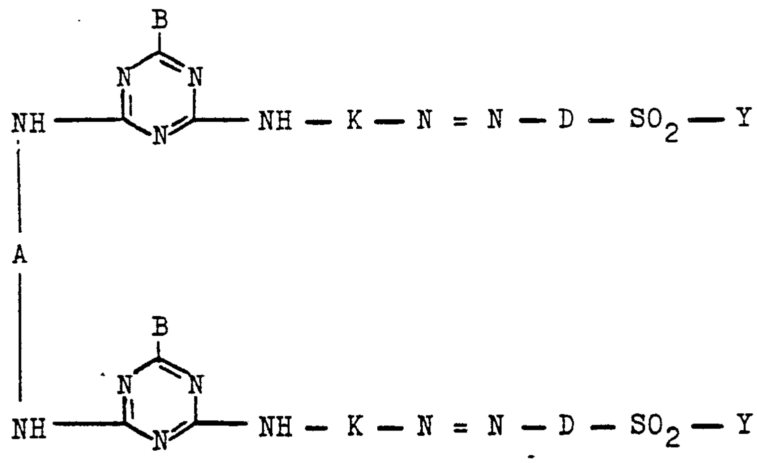

(1)

in which :

A is an alkylene group of 2 to 6 carbon atoms or a phenylene radical which can be substituted by 1 or 2 substituents, or is a radical of the general formula (2)

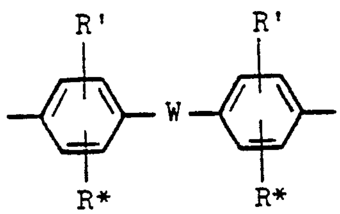

(2)

in which

W is a direct bond or a bridge member and R′ and R* each denote a hydrogen atom, a chlorine atom, a methyl, methoxy, ethoxy, carboxyl or sulfo group ;

B is a chlorine or a fluorine atom ;

D is a phenylene radical which can be substituted by 1 or 2 substituents from the group composed of chlorine, bromine, alkyl of 1 to 4 carbon atoms, alkoxy or 1 to 4 carbon atoms, carboxyl and sulfo, or is a naphthylene radical which can be substituted by 1 or 2 sulfo groups ;

Y is a vinyl group or an ethyl group which is substituted in the β-position by a substituent which can be eliminated by alkaline ;

K is a radical of the general formula (3a) or (3b)

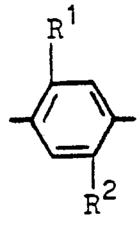

(3a)

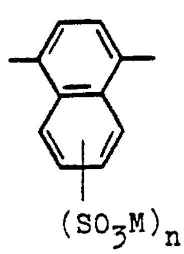

(3b)

in which

$R^1$ is a hydrogen atom, an alkyl group of 1 to 4 carbon atoms, an alkoxy group of 1 to 4 carbon atoms, a sulfo group or a carboxyl group,

$R^2$ is an alkyl group of 1 to 4 carbon atoms, an alkoxy group of 1 to 4 carbon atoms, a phenoxy group, an alkanoylamino group of 2 to 5 carbon atoms which can be substituted by a chlorine or bromine atom, a benzoylamino group, a benzoylamino group which is substituted in the benzene ring by 1 or 2 substituents from the group composed of chlorine, sulfo, carboxyl, methyl and nitro, a benzenesulfonylamino group, a benzenesulfonylamino group which is substituted in the benzene ring by 1 or 2 substituents from the group composed of chlorine, sulfo, carboxyl and methyl, a ureido group or an N'-phenylureido group ;

M is a hydrogen atom or and alkali metal and

n stands for the number zero, 1 or 2.

2. The compound as claimed in claim 1, wherein the formula members which occur twice have the same meaning in each case.

3. The compound as claimed in claim 1 or 2, wherein the formula members B each denote a chlorine atom.

4. The compound as claimed in claim 1 or 2 of the general formula (1) in which

A is an alkylene group of 2 to 6 carbon atoms or a phenylene radical which can be substituted by 1 or 2 substituents from the group composed of alkoxy of 1 to 4 carbon atoms, alkyl of 1 to 4 carbon atoms, chlorine, sulfo and carboxyl, or

A is a radical of the general formula (2a)

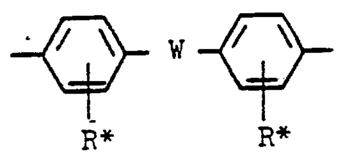

(2a)

in which

W is a direct bond or a bridge member of the formula $—CH_2—$, $—CH_2—CH_2—$, $—O—CH_2—CH_2—O—$, $—CH = CH—$, $—N = N—$, $—NH—CO—NH—$ or $—CO—NH—$ and each radical R*, identical to or different to one another, denotes a hydrogen atom, a chlorine atom, a methyl, methoxy, ethoxy or sulfo group,

B is a chlorine atom and

D, K and Y have the meanings given in claim 1.

5. A compound as claimed in at least one of claims 1 to 4, wherein the formula radical D is a phenylene radical which can be substituted by 1 or 2 substituents from the group composed of chlorine, bromine, alkyl of 1 to 4 carbon atoms, alkoxy of 1 to 4 carbon atoms, carboxyl and sulfo.

6. The compound as claimed in at least one of claims 1 to 5, wherein Y is a vinyl group or a β-sulfatoethyl, β-phosphatoethyl, β-thiosulfatoethyl, β-dimethylaminoethyl, β-diethylaminoethyl or a β-chloroethyl group.

7. The compound as claimed in at least one of claims 1 to 5, wherein Y is a vinyl group or a β-sulfatoethyl group.

8. The compound as claimed in at least one of claims 1 to 4, 6 und 7, wherein D is an unsubstituted phenylene radical or a phenylene radical substituted by a methoxy group.

9. A process for the preparation of the compount as claimed and defined in claim 1 of the general formula (1), which comprises condensing 1 mol of a bis (dihalogenotriazinylamino) compound of the general formula (4)

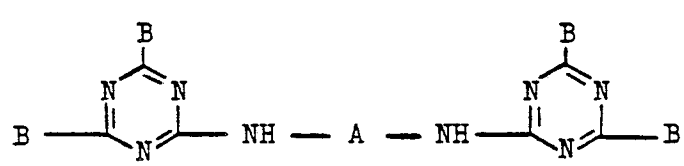

(4)

in which A and B have the meanings given in claim 1 and both formula members B have a meaning identical to one another with 2 mol of an amino compound of the general formula (5)

$$H_2N—K—N = N—D—SO_2—Y \quad (5)$$

in which D, K and Y have the meanings given in claim 1 or with 1 mol each of two different amino compounds of the general formula (5), or condensing 2 mol of a dihalogenotriazinylamino compound of the general formula (6)

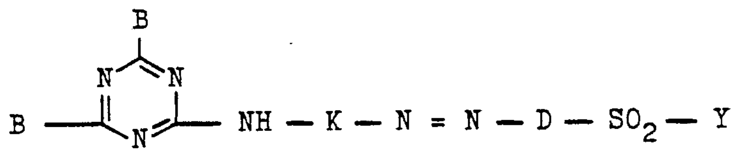

(6)

in which B, D, K and Y have the meanings given in claim 1 and both formula members B have a meaning identical to one another or 1 mol each of two different dihalogenotriazinylamino compounds of the general formula (6) with 1 mol of a diamino compound of the general formula (7)

$$H_2N—A—NH_2 \quad (7)$$

in which A has the meaning given in claim 1.

10. Use of the compound as claimed and defined in claim 1 of the general formula (1) as dye.

11. The use as claimed in claim 10 for the dyeing of hydroxyl- and/or carboxamido-containing material, preferably fiber material.

12. The use as claimed in claim 11, wherein the fiber material is a cellulose fiber/polyester fiber mixture or a cellulose fiber/cellulose acetate fiber mixture.

13. A process for the dyeing (including printing) of hydroxyl- and/or carboxamido-containing material, preferably fiber material, in which a dye is applied to the material from an aqueous solution and fixed by means of heat and/or by means of an alkaline agent, wherein the dye used is the compound as claimed in claim 1.

14. A process for the dyeing of hydroxyl-containing fiber material, preferably cellulose fiber material, which comprises applying the compound as claimed in claim 1 to the material in aqueous solution and allowing it to act on the material from an aqueous solution at a pH between 4 and 8 and at a temperature between 100 and 150 °C and fixing it on the material.

15. The process as claimed in claim 14, wherein the dyeing is carried out at a pH between 5 and 7,5.

16. The process as claimed in claim 14 or 15, wherein the fiber material used is a cellulose fiber/polyester fiber mixture or a cellulose fiber/cellulose triacetate fiber mixture.

17. The process as claimed in claim 16, wherein additionally a disperse dye is used.

## Revendications

1. Composés hydrosolubles de formule générale (1) ci-dessous :

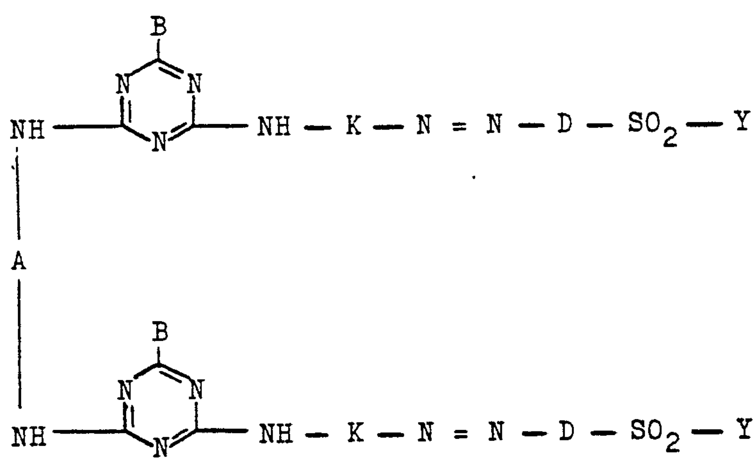

(1)

dans laquelle :

A désigne un alkylène en $C_2$ à $C_6$ ou un phénylène, pouvant avoir 1 ou 2 substituants, ou un radical de formule (2) :

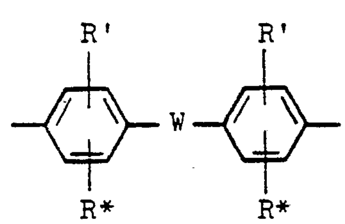

(2)

W représentant une liaison directe ou un pont et R' et R* chacun un atome d'hydrogène ou de chlore ou un groupe méthyle, méthoxy, éthoxy, carboxy ou sulfo ;

B est un atome de chlore ou de fluor ;

D est un radical phénylène pouvant avoir un ou deux substituants choisis parmi le chlore, le brome, des alkyles et alcoxy en $C_1$ à $C_4$ et les groupes carboxy et sulfo, ou bien un radical naphtylène pouvant avoir un ou deux groupes sulfo ;

Y est le groupe vinyle ou le groupe éthyle avec à la position β un substituant éliminable par un alcali ; et

K est un radical de formule (3a) ou (3b) :

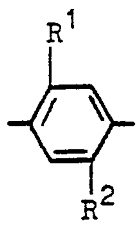
(3a)

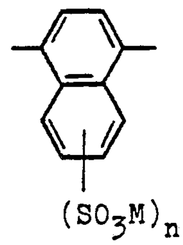
(3b)

formules dans lesquelles :

$R^1$ désigne un atome d'hydrogène, un alkyle ou un alcoxy en $C_1$ à $C_4$ ou un groupe sulfo ou carboxy,

$R^2$ un alkyle ou un alcoxy en $C_1$-$C_4$, le groupe phénoxy, un alcanoylamino en $C_2$ à $C_5$ pouvant être substitué par un atome de chlore ou de brome, un groupe benzoylamino avec éventuellement sur le cycle benzénique un ou deux substituants choisis parmi le chlore et les groupes sulfo, carboxy, méthyle et nitro, un groupe benzène-sulfonylamino avec éventuellement sur le cycle benzénique un ou deux substituants choisis parmi le chlore et les groupes sulfo, carboxy et méthyle, ou encore le groupe uréido ou N'-phényl-uréido ;

M est un atome d'hydrogène ou un métal alcalin et

n est le nombre 0, 1 ou 2.

2. Composé selon la revendication 1 caractérisé en ce que les symboles qui apparaissent deux fois dans la formule ont chaque fois la même signification.

3. Composé selon la revendication 1 ou 2 caractérisé en ce que les deux symboles B désignent chacun un atome de chlore.

4. Composé selon la revendication 1 ou 2 de formule générale (1), dans lequel :

A est un alkylène en $C_2$ à $C_6$ ou un phénylène, pouvant avoir 1 ou 2 substituants choisis parmi des groupes alcoxy et alkyles en $C_1$ à $C_4$, le chlore et les groupes sulfo et carboxy, ou bien :

A est un radical de formule (2a) :

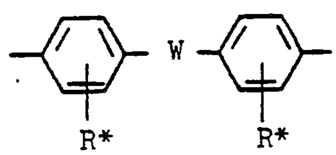
(2a)

dans laquelle W représente une liaison directe ou un pont tel que le groupe $-CH_2-$, $-CH_2-CH_2-$, $-O-CH_2-CH_2-O-$, $-CH=CH-$, $-N=N-$, $-NH-CO-NH-$ ou $-CO-NH-$, et les deux symboles R*, qui peuvent être identiques ou différents l'un de l'autre, représentent chacun un atome d'hydrogène ou de chlore ou un groupe méthyle, méthoxy, éthoxy ou sulfo ;

B est un atome de chlore et

D, K et Y ont les significations qui ont été données à la revendication 1.

5. Composé selon l'une ou plusieurs des revendications 1 à 4, caractérisé en ce que le radical D est un radical phénylène pouvant avoir 1 ou 2 substituants choisis parmi le chlore, le brome, des alkyles et alcoxy en $C_1$ à $C_4$ et les groupes carboxy et sulfo.

6. Composé selon l'une ou plusieurs des revendications 1 à 5, caractérisé en ce que Y est le groupe vinyle, ou un groupe β-sulfatoéthyle, β-phosphatoéthyle, β-thiosulfatoéthyle, β-diméthylamino-éthyle, β-diéthylamino-éthyle ou β-chloroéthyle.

7. Composé selon l'une ou plusieurs des revendications 1 à 5, caractérisé en ce que Y est le groupe vinyle ou un groupe β-sulfatoéthyle.

8. Composé selon l'une ou plusieurs des revendications 1 à 4, 6 et 7, caractérisé en ce que D est un radical phénylène ou méthoxy-phénylène.

9. Procédé de préparation des composés de formule générale (1) définie à la revendication 1, procédé caractérisé en ce que l'on condense 1 mol d'un composé bis-dihalogénotriazinylamino de formule générale (4) :

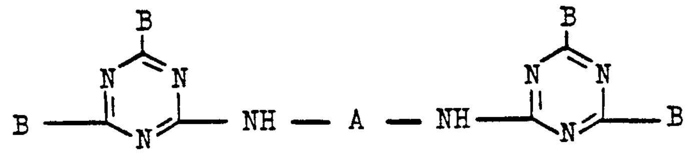

(4)

les deux symboles B ayant la même signification, avec 2 mol d'un composé aminé de formule (5) :

$$H_2N—K—N = N—D—SO_2—Y \tag{5}$$

ou bien avec 1 mol de chacun de deux composés aminés différents de formule (5) ci-dessus, ou bien on condense 2 mol d'un composé dihalogénotriazinylamino de formule (6) :

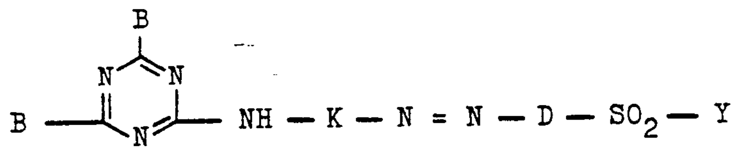

(6)

les deux symboles B ayant la même signification, ou 1 mol de chacun des deux composés dihalogénotriazinylamino différents de formule (6), avec 1 mol d'un composé diaminé de formule (7) :

$$H_2N—A—NH_2 \tag{7}$$

10. L'emploi comme matières colorantes des composés de formule (1) selon la revendication 1.

11. Emploi selon la revendication 10 pour la teinture de matière ayant des groupes hydroxyliques et/ou carboxamides, de préférence de matières fibreuses.

12. Emploi selon la revendication 11 caractérisé en ce que la matière fibreuse est constituée d'un mélange de fibres de cellulose et de fibres d'un polyester ou d'un mélange de fibres de cellulose et de fibres d'acétate de cellulose.

13. Procédé de teinture (et impression) d'une matière à groupes hydroxyliques et/ou carboxamides, de préférence d'une matière fibreuse, dans lequel on applique un colorant sur cette matière à partir d'une solution aqueuse et on le fixe sous l'action de la chaleur et/ou avec un agent alcalin, procédé caractérisé en ce que l'on utilise comme colorant un composé selon la revendication 1.

14. Procédé de teinture de matières fibreuses à groupes hydroxyliques, de préférence de matières fibreuses cellulosiques, procédé caractérisé en ce que l'on applique sur la matière un composé selon la revendication 1 en solution aqueuse et on le laisse agir en solution aqueuse sur la matière à un pH de 4 à 8 et à une température de 100 à 150 °C, et on le fixe sur la matière.

15. Procédé selon la revendication 14 caractérisé en ce que l'on effectue la teinture à un pH compris entre 5 et 7,5.

16. Procédé selon la revendication 14 ou 15 caractérisé en ce que la matière fibreuse est un mélange de fibres de cellulose et de fibres d'un polyester ou un mélange de fibres de cellulose et de fibres de triacétate de cellulose.

17. Procédé selon la revendication 16 caractérisé en ce que l'on opère avec en plus un colorant de dispersion.